# EUROPEAN PATENT SPECIFICATION

(11) **EP 2 671 788 B1**
(45) Date of publication and mention of the grant of the patent: **20.04.2016**
(21) Application number: 12741787.1
(22) Date of filing: 27.01.2012
(51) Int. Cl.: B62M 6/45, B62M 6/50, B62M 6/65

(54) **ELECTRIC BICYCLE**
ELEKTRISCHES FAHRRAD
VÉLO ÉLECTRIQUE

(30) Priority: 31.01.2011 JP 2011018597
(43) Date of publication of application: 11.12.2013
(73) Proprietor: Sanyo Electric Co., Ltd., Osaka 570-8677 (JP)
(72) Inventor: SHIMAZU, Masahiro, Moriguchi-shi, Osaka 570-8677 (JP)
(74) Representative: Witte, Weller & Partner Patentanwälte mbB
(86) International application number: PCT/JP2012/000510
(87) International publication number: WO 2012/105198

(56) References cited:
- EP-A1- 0 734 945
- JP-A- 8 258 782
- JP-A- 2001 114 184
- JP-A- 2008 143 330
- JP-A- 2009 184 437

## Description

### Technical Field

The present invention relates to an electric bicycle.

### Background Art

A known electric bicycle includes a motor in the hub of a front wheel or a rear wheel (see Patent Literature 1).

An electric bicycle in Patent Literature 1 includes a motor in the hub of a front wheel. The motor includes a stator fixed on the front fork of the bicycle. An output rotation unit rotated by a rotor is connected to the front wheel via a one-way clutch.

When a rider pedals with human power on a rough road, e.g., a hill, the motor generates a driving force according to the pedal force (torque) of the rider to rotate the rotor. When the rotation speed (in other words, an angular velocity) of the output rotation unit rotated by the rotor exceeds the rotation speed of the front wheel (provided with the motor), the one-way clutch is engaged to transmit the rotary force of the output rotation unit to the front wheel via the one-way clutch. Thus, the front wheel is assisted by the driving force of the motor so as to strongly rotate, allowing the rider to pedal under lighter load on a hill.

### Citation List

### Patent Literature

Patent Literature 1: Japanese Patent Laid-Open No. 2009-12627

Document EP0 734 945 A1 shows the preamble of claim 1.

### Summary of Invention

### Technical Problem

A bicycle traveling at a high speed can coast substantially at a constant speed on a flat road without pedaling. In such a coasting state, a rider does not pedal the bicycle and thus motor driving (the rotations of a rotor and an output rotation unit) is stopped.

In a coasting state, the rider may start pedaling to increase a traveling speed. In this case, motor driving is started to start rotating the rotor in response to the start of pedaling. When the rotation speed of the output rotation unit exceeds the rotation speed of a front wheel, a one-way clutch is engaged to allow the motor to start rotating the front wheel (assisted driving).

In a coasting state, the wheel is substantially kept at a constant rotation speed. Thus, the rotation speed of the wheel hardly changes, and the angular acceleration of the wheel is nearly zero. From when driving of the motor is started in a coasting state to when the rotation speed of the output rotation unit rotated by the rotor exceeds the rotation speed of the front wheel, the rotation speed (angular velocity) of the output rotation unit increases at a high acceleration (angular acceleration) in a relatively rapid manner. Thus, when the rotation speed of the output rotation unit exceeds the rotation speed of the front wheel and the one-way clutch is engaged to transmit the rotary force of the output rotation unit to the wheel, the electric bicycle may have an impact caused by a difference in angular acceleration between the output rotation unit and the wheel. This makes it difficult to provide a more comfortable ride, and the impact may excessively wear the parts (particularly, the clutch and so on) of the electric bicycle.

The present invention has been devised against this backdrop. An object of the present invention is to provide an electric bicycle that can suppress an impact when pedaling in a coasting state allows a motor to start rotating a wheel.

### Solution to Problem

An invention of a first aspect is an electric bicycle that assists a driving force generated by rotating pedals with human power, with an auxiliary driving force generated by a motor, the electric bicycle including: a pedal force detector that detects a pedal force applied to the pedals; a motor including a rotor, the motor rotating, when the pedal force detector detects that the pedal force is not smaller than a predetermined force, the rotor and an output rotation unit rotated by the rotor so as to generate the auxiliary driving force on a wheel; a clutch that is disengaged to interrupt power transmission between the output rotation unit and the wheel when the output rotation unit rotated by the rotor has a rotation speed lower than the rotation speed of the wheel, and is engaged to transmit the auxiliary driving force to the wheel from the output rotation unit when the rotation speed of the output rotation unit rises to the rotation speed of the wheel; a wheel speed detector that detects the rotation speed of the wheel; a rotation speed detector that detects a rotation speed of one of the output rotation unit and the rotor corresponding to the output rotation unit; and a rotation controller that rotates, when the pedal force detector detects that the pedal force is not smaller than the predetermined force, the output rotation unit at least at a predetermined first acceleration if the rotation speed of the output rotation unit is not lower than the rotation speed of the wheel based on detected values of the wheel speed detector and the rotation speed detector, and rotates, if the rotation speed of the output rotation unit is lower than the rotation speed of the wheel, the output rotation unit at a second acceleration lower than the first acceleration when at least the clutch is engaged.

An invention of a second aspect is the electric bicycle, wherein in the case where the pedal force detector detects that the pedal force is not smaller than the predetermined force, the rotation controller rotates, when the rotation speed of the output rotation unit is reduced from the rotation speed of the wheel at least by a predetermined speed, the output rotation unit at a third acceleration higher than the second acceleration until a speed difference between the rotation speed of the output rotation unit and the rotation speed of the wheel falls below the predetermined speed.

### Advantageous Effects of Invention

According to the invention of the first aspect, in the electric bicycle, a driving force generated by rotating the pedals with human power is assisted by an auxiliary driving force generated by the motor.

A pedal force applied to the pedals is detected by the pedal force detector. The motor includes the rotor. In the case where the pedal force detector detects that the pedal force is not smaller than a predetermined force, the rotor and the output rotation unit rotated by the rotor are rotated to generate the auxiliary driving force on the wheel.

In the electric bicycle, when the rotation speed of the output rotation unit is lower than the rotation speed of the wheel, the clutch is disengaged to interrupt power transmission between the output rotation unit and the wheel. When the rotation speed of the output rotation unit increases to the rotation speed of the wheel, the clutch is engaged to transmit the auxiliary driving force from the output rotation unit to the wheel.

The wheel speed detector detects the rotation speed of the wheel while the rotation speed detector detects the rotation speed of the output rotation unit.

When the pedal force detector detects that the pedal force is not smaller than the predetermined force, the rotation controller rotates the output rotation unit at least at the predetermined first acceleration if the rotation speed of the output rotation unit is not lower than the rotation speed of the wheel based on the detected values of the wheel speed detector and the rotation speed detector. It is expected that the rotation speed of the output rotation unit is not lower than that of the wheel in a typical (assisted) state where an auxiliary driving force has been generated or in a stopped state where the rotation speeds of the output rotation unit and the wheel are 0.

When the rotation speed of the output rotation unit is lower than that of the wheel, the electric bicycle starts pedaling in a coasting state having not involved pedaling. In this case, at least when the clutch is engaged, the rotation controller rotates the rotor at the second acceleration lower than the first acceleration. Thus, when the clutch is engaged, the rotation speed of the output rotation unit less rapidly increases to the rotation speed of the wheel than at the first acceleration. Thus, the auxiliary driving force can be smoothly transmitted from the output rotation unit to the wheel.

As a result, an impact can be suppressed when the pedals are pressed and the motor starts rotating the wheel in a coasting state.

According to the invention of the second aspect, in the case where the pedal force detector detects that the pedal force is not smaller than the predetermined force, when the rotation speed of the output rotation unit is reduced from the rotation speed of the wheel at least by the predetermined speed, the rotation controller rotates the output rotation unit at the third acceleration higher than the second acceleration until a speed difference between the rotation speed of the output rotation unit and the rotation speed of the wheel falls below the predetermined speed.

Hence, the speed difference between the rotation speed of the output rotation unit and the rotation speed of the wheel falls below the predetermined speed earlier than at the second acceleration. Accordingly, the rotation speed of the output rotation unit can rise to the rotation speed of the wheel (the clutch is engaged) in a shorter time. As a result, the transmission of an auxiliary driving force can be started earlier from the output rotation unit to the wheel (riding assisted by the auxiliary driving force).

### Brief Description of Drawings

[FIG. 1] FIG. 1 is a right side view of an electric bicycle 1 according to an embodiment of the present invention.
[FIG. 2] FIG. 2 is a front cross-sectional view of a hub unit 4.
[FIG. 3] FIG. 3 is a control circuit block diagram of the electric bicycle 1.
[FIG. 4] FIG. 4 is a flowchart showing an example of a control operation performed on the electric bicycle 1.
[FIG. 5] FIG. 5 is a graph for explaining a rotation speed change of an output rotation unit when the output rotation unit starts rotating in a coasting state.
[FIG. 6] FIG. 6 is a flowchart showing a modification of the control operation performed on the electric bicycle 1.
[FIG. 7] FIG. 7 is a graph for explaining a rotation speed change of the output rotation unit in the modification in which the output rotation unit starts rotating in a coasting state.

### Description of Embodiments

An embodiment of the present invention will be specifically described below with reference to the accompanying drawings.

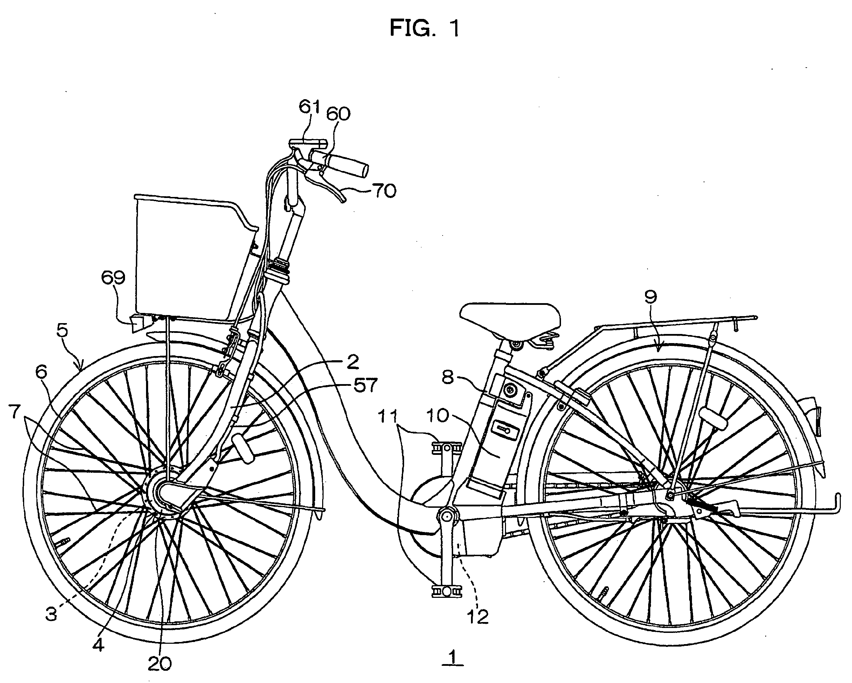

FIG. 1 is a right side view illustrating an electric bicycle 1 according to the embodiment of the present invention.

In the following explanation, the directions of the electric bicycle 1 are specified with respect to the front side (the left side of FIG. 1) of the electric bicycle 1. Thus, in FIG. 1, the left side indicated on the paper is the front side of the bicycle, the right side thereon is the rear side of the bicycle, the near side thereon is the right side of the bicycle, and the far side thereon is the left side of the bicycle.

As shown in FIG. 1, in the electric bicycle 1, a hub unit 4 containing a motor 3 is attached to the ends (lower ends) of a front fork 2. A rim 6 of a wheel at the front (front wheel) 5 is connected to the hub unit 4 via spokes 7. The electric bicycle 1 further includes a battery 10 mounted between a seat post 8 and a rear wheel 9. Moreover, the electric bicycle 1 includes a sensor 12 (pedal force detector) located at a position receiving a pressing force (pedal force) from pedals 11. The sensor 12 detects the pedal force applied to the pedals 11. When the sensor 12 detects a predetermined pedal force, power is applied to the motor 3 of the hub unit 4 from the battery 10, allowing the motor 3 to generate a driving force (will be called "auxiliary driving force") for the front wheel 5. Since the front wheel 5 is rotated by the auxiliary driving force, the electric bicycle 1 can be moved forward even by a small pedal force. In other words, in the electric bicycle 1, a driving force generated by rotating the pedals 11 with human power is assisted by an auxiliary driving force generated by the motor 3.

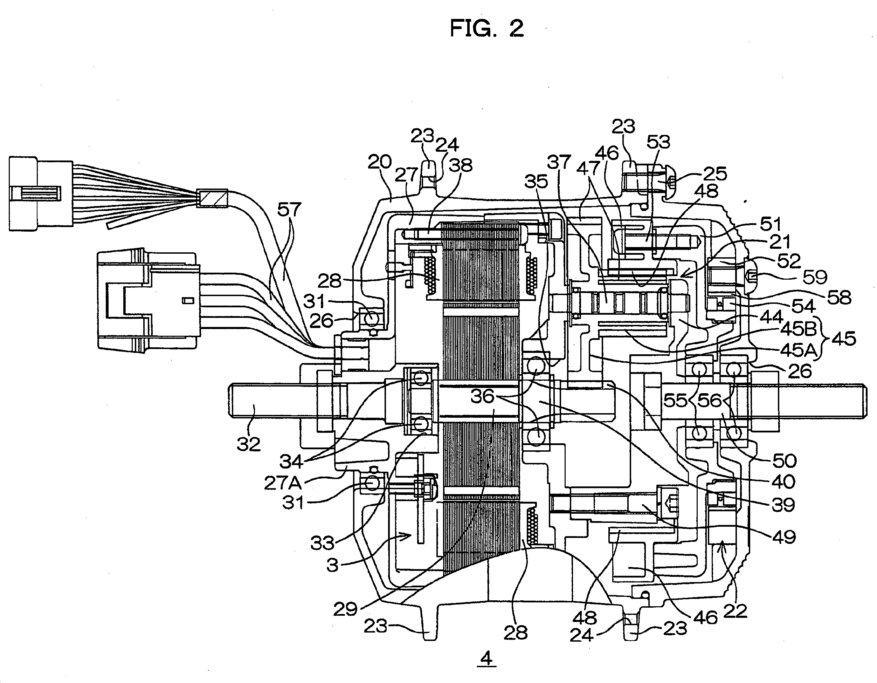

FIG. 2 is a front cross-sectional view of the hub unit 4.

Referring to FIG. 2, the hub unit 4 includes a hub casing 20 serving as an outer case, the motor 3, a speed reducing mechanism 21, and a clutch 22.

The hub casing 20 is a hollow cylinder having a laterally extended central axis. On the outer surface of the hub casing 20, projections 23 are integrally formed from the hub casing 20 in a radial direction so as to be spaced in a lateral direction and a circumferential direction. The projection 23 has a through hole 24 for locking the spoke 7 (see FIG. 1). The hub casing 20 can be laterally divided at the position of the right projection 23. The left and right parts of the hub casing 20 can be assembled with a screw 25. The left and right side walls of the hub casing 20 are shaped like discs, each having a central position where a through hole 26 laterally penetrating the side walls is formed.

The motor 3 is located on the left side of the hub casing 20. The motor 3 includes a motor casing 27 serving as an outer case, a stator 28, and a rotor 29. The motor casing 27 is a hollow cylinder having a laterally extended central axis. The motor casing 27 has a left end 27A that is reduced in diameter. The left end 27A is inserted from the right side into the through hole 26 on the left side wall of the hub casing 20. A ring bearing 31 is interposed between the left end 27A of the motor casing 27 and the edge of the through hole 26 on the left side wall of the hub casing 20. Thus, the hub casing 20 and the motor casing 27 are connected so as to rotate relative to each other. On the left end 27A of the motor casing 27, a support shaft 32 is integrally provided so as to protrude from the circle center position of the left end 27A outwardly to the left side. The right end face of the support shaft 32 faces the interior of the motor casing 27 and has a recess 33 dented to the left. A ring bearing 34 is fit into the recess 33. The right side wall of the motor casing 27 is shaped like a disc having a through hole 35 at the circle center position of the right side wall. The through hole 35 laterally penetrates the right side wall. A ring bearing 36 is fit into the through hole 35. Furthermore, three shafts 37 protruding outwardly to the right side are provided outside the through hole 35 in the radial direction and are located at regular intervals in a circumferential direction on the right side wall.

The stator 28 is a ring stator having a central axis extending in the lateral direction. The stator 28 is accommodated in the motor casing 27 and is fixed to the motor casing 27 with a screw 38. The rotor 29 is disposed in the hollow part of the stator 28 so as to be concentric with the stator 28. Moreover, a laterally protruding support shaft 39 is integrally provided on the rotor 29 so as to be located at the circle center position of the stator 28. The support shaft 39 is inserted into the hollow part of the bearing 36 of the through hole 35 on the right side wall of the motor casing 27 and the hollow part of the bearing 34 of the support shaft 32 on the left end 27A of the motor casing 27. Thus, the rotor 29 is rotatably supported by the motor casing 27 through the bearing 36 and the bearing 34. The right end of the support shaft 39 protrudes out of the right side wall of the motor casing 27. A gear 40 is formed on the outer surface of the support shaft 39.

The speed reducing mechanism 21 is disposed on the right of the motor 3 in the hub casing 20. The speed reducing mechanism 21 includes three gears 45, a rotary table 46, and a holder 44. FIG. 2 illustrates one of the gears 45.

The gear 45 is a cylinder having a laterally extended central axis. One of the shafts 37 on the right side wall of the motor casing 27 is inserted at the circle center of the gear 45. The gear 45 is rotatably supported by the corresponding shaft 37. The gear 45 has a large-diameter part 45A on the left side and a small-diameter part 45B that is located integrally on the right of the large-diameter part 45A and is smaller in diameter than the large-diameter part 45A. A gear 47 is formed on each of the outer surfaces of the large-diameter part 45A and the small-diameter part 45B. The gear 47 on the large-diameter part 45A of the gear 45 is engaged with the gear 40 on the right end of the support shaft 39 of the rotor 29.

The rotary table 46 is disposed on the right of the gears 45. The rotary table 46 is circular when viewed in the lateral direction. The outer end of the rotary table 46 is entirely bent to the left. A gear 48 is formed on the inner surface of the bent part. The gear 48 is engaged with the gear 47 of the small-diameter part 45B of the gear 45. Thus, the gear 40 serving as a sun gear on the support shaft 39 and the three gears 45 serving as planetary gears constitute a planetary gear mechanism.

The holder 44 is a disc having a smaller diameter than the rotary table 46. The holder 44 is disposed between the three gears 45 and the rotary table 46 in the lateral direction in a noncontact manner with the gears 45 and the rotary table 46. The holder 44 has the three gears 45 facing the right side wall of the motor casing 27 from the right, and supports the right ends of the shafts 37 on the right side wall. The holder 44 is fixed on the right side wall of the motor casing 27 with a screw 49. A laterally extended support shaft 50 is inserted at the circle center position of the holder 44 and is fixed on the holder 44. The support shaft 50 projects outwardly to the right from the holder 44.

The clutch 22 in the hub casing 20 is disposed on the right of the speed reducing mechanism 21 and on the left of the right side wall of the hub casing 20. The clutch 22 is a so-called one-way clutch including a first rotary table 51 acting as an output rotation unit rotated by the rotor 29 of the motor 3 via the speed reducing mechanism 21, and a second rotary table 52.

The first rotary table 51 serving as an output rotation unit is an annular ring having a laterally extended central axis. The outer end of the first rotary table 51 is fixed to the rotary table 46 of the speed reducing mechanism 21 with a screw 53. The inner end of the first rotary table 51 projects to the right side. Multiple ratchet claws 54 are provided around the inner projecting end. The ratchet claws 54 elastically project to the outside in the radial direction while being oriented in one circumferential direction of the first rotary table 51 (specifically, in the same direction as the rotation direction of the front wheel 5). A ring bearing 55 is fit at the hollow part of the first rotary table 51, and the support shaft 50 of the holder 44 is inserted into the hollow part of the bearing 55 from the left. The support shaft 50 rotatably supports the first rotary table 51 through the bearing 55.

The second rotary table 52 is an annular ring having a laterally extended central axis. The outer end of the second rotary table 59 is fixed to the right side wall of the hub casing 20 with a screw 59. Multiple ratchet grooves 58 are formed over the inner surface of the second rotary table 52. The ratchet grooves 58 are dented to the outside in the radial direction while being oriented in one circumferential direction of the second rotary table 52 (specifically, in the same direction as the rotation direction of the front wheel 5).

A ring bearing 56 is fit into the through hole 26 on the right side wall of the hub casing 20. The support shaft 50 is inserted into the hollow part of the bearing 56 from the left. The support shaft 50 rotatably supports the hub casing 20 and the second rotary table 52 through the bearing 56. The right end of the support shaft 50 projects out of the right side wall of the hub casing 20 to the right side.

The ratchet claws 54 of the first rotary table 51 are located at the same positions as the ratchet grooves 58 of the second rotary table 52 in the lateral direction and are located inside the ratchet grooves 58 in the radial direction. In the right side view, in the case where the first rotary table 51 and the second rotary table 52 rotate counterclockwise (the rotation direction of the front wheel 5), the ratchet claws 54 are engaged into the ratchet grooves 58 to combine the first rotary table 51 and the second rotary table 52 when the rotation speed of the first rotary table 51 serving as an output rotation unit exceeds the rotation speed of the second rotary table 52. In this state, the clutch 22 is engaged.

When the rotation speed of the first rotary table (output rotation unit) 51 falls below the rotation speed of the second rotary table 52, the ratchet claws 54 are disengaged from the ratchet grooves 58 to disconnect the first rotary table 51 and the second rotary table 52. In this state, the clutch 22 is disengaged. When the clutch 22 is disengaged while the first rotary table 51 and the second rotary table 52 are rotated, the ratchet claws 54 elastically retract inward in the radial direction of the first rotary table 51 and thus are not engaged with the ratchet grooves 58 in the rotation direction. Thus, the first rotary table 51 and the second rotary table 52 can smoothly rotate relative to each other.

In the hub unit 4 configured thus, the support shafts 32 and 50 on the motor casing 27 are fixed to the ends of the front fork 2 (see FIG. 2). The spokes 7 (see FIG. 2) of the front wheel 5 are locked into the through holes 24 of the projections 23 on the outer surface of the hub casing 20. Hence, in the hub unit 4, at least the motor casing 27 and the stator 28 are fixed to the front fork 2 while the hub casing 20 and the second rotary table 52 are fixed to the front wheel 5. Thus, the rotation speed of the front wheel 5 is equal to those of the hub casing 20 and the second rotary table 52.

When the motor 3 receives power from the battery 10 (see FIG. 1) through wires 57, the motor 3 rotates the rotor 29 concentrically with the front wheel 5 clockwise in the right side view so as to generate the auxiliary driving force. The auxiliary driving force is transmitted to the rotary table 46 from the support shaft 39 of the rotor 29 through the gears 45 of the speed reducing mechanism 21, rotating the rotary table 46 with the first rotary table (output rotation unit) 51 of the clutch 22 counterclockwise in the right side view.

Since the speed reducing mechanism 21 is provided, the rotation speed of the first rotary table (output rotation unit) 51 is lower than that of the rotor 29. Alternatively, the rotor 29 and the first rotary table 51 may be directly connected to each other in the absence of the speed reducing mechanism 21. In this configuration, the rotation speed of the first rotary table 51 serving as an output rotation unit is equal to the rotation speed of the rotor 29. In the present embodiment, the speed reducing mechanism 21 causes the first rotary table 51 serving as an output rotation unit and the rotor 29 to rotate in opposite directions. In the case where the rotor 29 and the first rotary table 51 are directly connected to each other, the first rotary table 51 and the rotor 29 rotate in the same direction (counterclockwise in the right side view). Thus, in the case where the rotation speed of the first rotary table 51 is proportionate to that of the rotor 29, the rotation directions of the first rotary table 51 and the rotor 29 are not taken into consideration.

In the case where the rotation speed of the first rotary table 51 is equal to or higher than that of the second rotary table 52 (front wheel 5), the first rotary table 51 and the second rotary table 52 are both rotated so as to engage the clutch 22 (the rotation speeds may be 0). Thus, the hub casing 20 fixed to the second rotary table 52 rotates in the same direction (counterclockwise in the right side view) as the first rotary table 51, rotating the front wheel 5 (see FIG. 1) in the same direction.

When the rotation speed of the first rotary table 51 falls below the rotation speed of the second rotary table 52 (front wheel 5), the clutch 22 is disengaged.

Specifically, when the rotation speed of the first rotary table 51 serving as an output rotation unit is lower than that of the front wheel 5 (second rotary table 52), the clutch 22 is disengaged to interrupt power transmission between the first rotary table 51 and the front wheel 5. When the rotation speed of the first rotary table 51 increases to that of the front wheel 5, the clutch 22 is engaged to transmit the auxiliary driving force from the first rotary table 51 to the front wheel 5. The clutch 22 is specifically disclosed in Patent Literature 1 (Japanese Patent Laid-Open No. 2009-12627).

Referring to FIG. 1, a manual operation part 61 is attached to a handlebar 60 of the electric bicycle 1. A user can set output characteristics such as the auxiliary driving force of the motor 3 in response to traveling modes, e.g., a flat road mode and an uphill mode by operating the manual operation part 61.

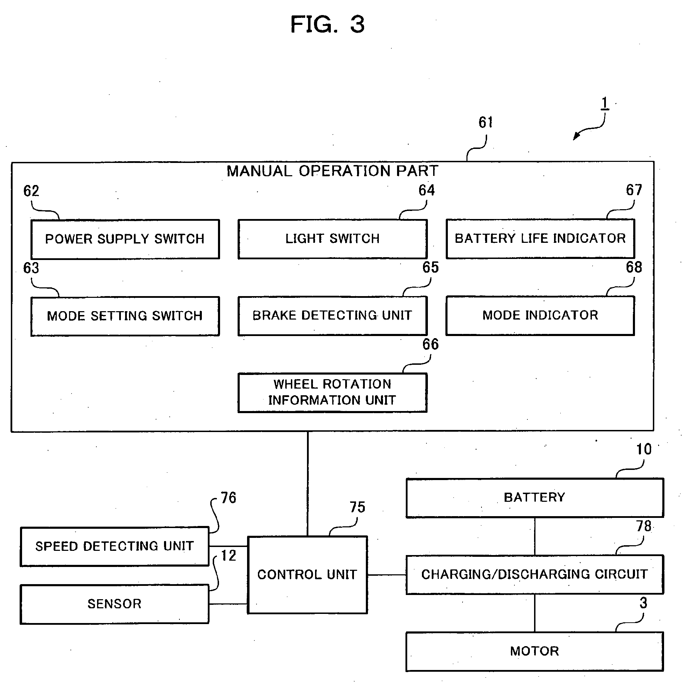

FIG. 3 is a control circuit block diagram of the electric bicycle 1.

Referring to FIG. 3, the manual operation part 61 includes a power supply switch 62, a mode setting switch 63, a light switch 64, a brake detecting unit 65, a wheel rotation information unit 66 (wheel velocity detector), a battery life indicator 67, and a mode indicator 68.

The power supply switch 62 is a switch for turning on/off the power supply of the electric bicycle 1. The mode setting switch 63 is a switch for setting the traveling mode. The light switch 64 is a switch for turning on or off a light 69 (FIG. 1). The brake detecting unit 65 detects whether or not a brake lever 70 (FIG. 1) attached to the handlebar 60 has been operated to apply a brake (not shown). During braking, an indicator lamp (not shown) of the manual operation part 61 may be turned on to indicate the braking. The wheel rotation information unit 66 detects the rotation speed of the front wheel 5 (in other words, the second rotary table 52 and the hub casing 20). Precisely, in the wheel rotation information unit 66, a part for actually detecting the rotation speed of the front wheel 5 is attached near the front wheel 5. The battery life indicator 67 indicates the life of the battery 10. The mode indicator 68 indicates the current traveling mode.

The electric bicycle 1 further includes a control unit 75 (rotation controller) composed of a microcomputer or the like. In the electric bicycle 1, the control unit 75 is electrically connected to the manual operation part 61 (the components including the wheel rotation information unit 66 in the manual operation part 61), a speed detecting unit 76 (rotation speed detector), the sensor 12, the battery 10, and the motor 3. The battery 10 and the motor 3 are connected to the control unit 75 via a charging/discharging circuit 78.

The speed detecting unit (rotation speed detector) 76 detects the rotation speed of the rotor 29 of the motor 3, and calculates the rotation speed of the first rotary table 51 based on the rotation speed and the speed reduction ratio of the speed reducing mechanism 21. The power of the battery 10 is supplied to the motor 3 through the charging/discharging circuit 78 under the control of the control unit 75. Instead of detecting the rotation speed of the rotor 29, the rotation speed of the first rotary table 51 may be directly detected or the rotation speed of the first rotary table 51 may be calculated from the speed of a rotation part on a power transmission path from the rotor 29 to the first rotary table 51.

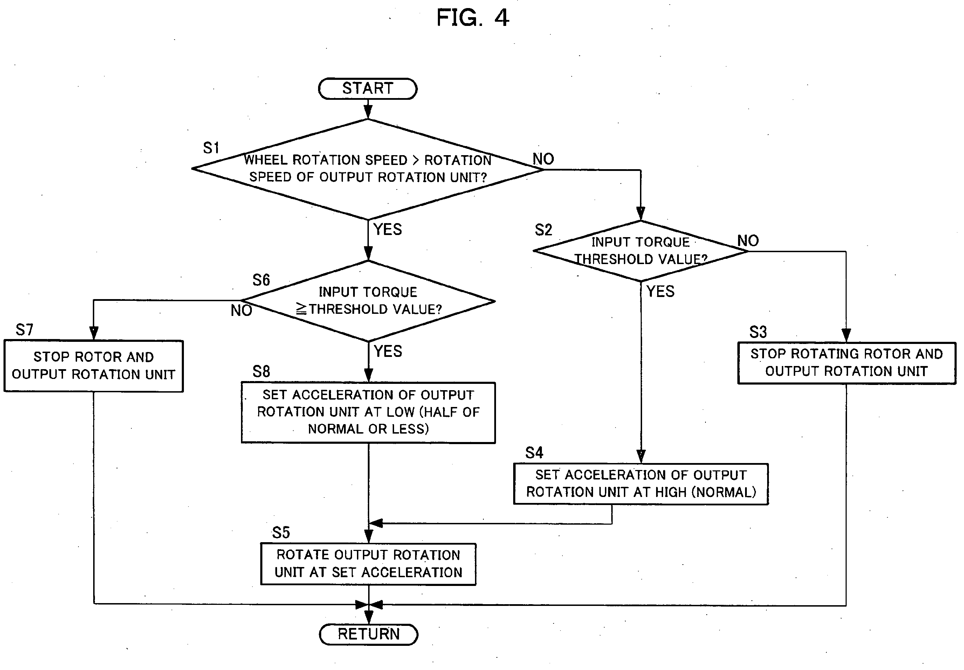

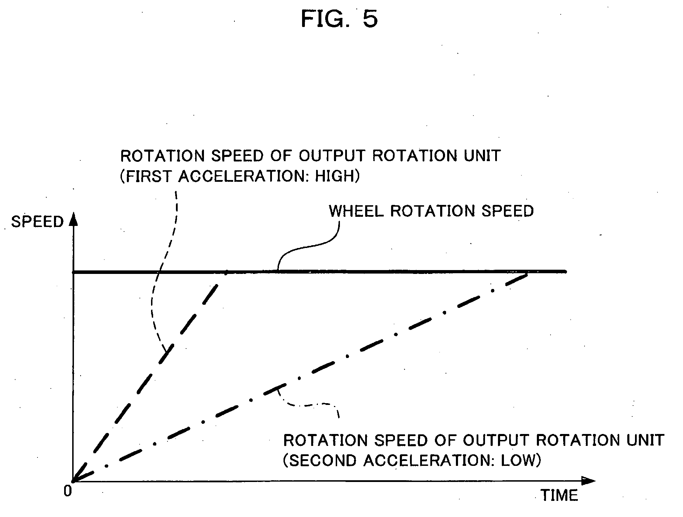

FIG. 4 is a flowchart showing an example of a control operation performed on the electric bicycle 1. FIG. 5 is a graph for explaining a rotation speed change of the first rotary table (output rotation unit) 51 when the rotor and the first rotary table (output rotation unit) 51 start rotating in a coasting state.

Referring to FIG. 4, the control unit 75 monitors whether or not the rotation speed of the front wheel 5 (wheel) exceeds the rotation speed of the first rotary table (output rotation unit) 51 based on the detection results of the wheel rotation information unit 66 and the speed detecting unit 76 (FIG. 3) (step S1). When the rotation speed of the wheel exceeds the rotation speed of the first rotary table (output rotation unit) 51 (YES in step S1), typically, the electric bicycle 1 travels at a high speed and coasts at a constant speed without a strong press (coasting state) on the pedals 11 (FIG. 1). Conversely, when the rotation speed of the wheel 5 is not higher than that of the first rotary table (output rotation unit) 51 (NO in step S1), it is expected that the rotation speed of the first rotary table (output rotation unit) 51 is not lower than that of the front wheel 5 in a typical assisted state where an auxiliary driving force has been already generated or in a stopped state where the rotation speeds of the first rotary table (output rotation unit) 51 and the front wheel 5 are 0. In other words, in step S1, the control unit 75 decides whether the electric bicycle 1 is in a coasting state or not. The clutch 22 (FIG. 2) is engaged in an assisted state and a stopped state but is not engaged (disengaged) in a coasting state.

The rotation speeds may be replaced with the angular velocities or rpms of the front wheel 5 and the first rotary table (output rotation unit) 51. Alternatively, the rotation speeds of the front wheel 5 and the first rotary table (output rotation unit) 51 may be converted to traveling speeds for the electric bicycle 1. In this case, the wheel rotation information unit 66 (FIG. 3) detects a converted value selected from a rotation speed, an angular velocity, rpm, and a traveling speed for the front wheel 5 (in other words, the second rotary table 52). The speed detecting unit 76 (FIG. 3) detects a converted value selected from a rotation speed, an angular velocity, rpm, and a traveling speed for the first rotary table (output rotation unit) 51 (in the absence of the speed reducing mechanism 21, the rotor 29).

In an assisted state or a stopped state (No in step S1), the control unit 75 confirms a detection result obtained by the sensor 12 (see FIG. 3) regarding a pedal force (input torque) applied to the pedals 11 (see FIG. 1) by the user (rider) (step S2). In traveling on a road requiring an auxiliary driving force, the user presses the pedals 11 with a pedal force not smaller than a predetermined threshold value (e.g., 14 N·m).

In the case where the input torque is lower than the predetermined threshold value requiring an auxiliary driving force (NO in step S2), an auxiliary driving force is not necessary. Thus, the control unit 75 does not rotate the rotor 29 and the first rotary table 51 (step S3).

In the case where the input torque is not lower than the predetermined threshold value (YES in step S2), an auxiliary driving force is necessary. Thus, the control unit 75 sets an acceleration (a rate of rise) of the rotation speed of the first rotary table 51 at normal (high) (step S4). The acceleration at high (normal) is defined as a first acceleration. In the case where a value converted to a traveling speed is used instead of the rotation speed, the acceleration is, for example, 1.4 m/s². The control unit 75 rotates the first rotary table 51 at the set (first) acceleration (step S5).

As a result, the rotation speed of the rotor 29 increases along a linear track indicated by a broken line in FIG. 5, generating an auxiliary driving force corresponding to the (first) acceleration. Since the clutch 22 (FIG. 2) has been already engaged, the rotation speed of the first rotary table (output rotation unit) 51 increases; meanwhile, an auxiliary driving force is applied to the front wheel 5 to provide the assisted riding. The first acceleration may fluctuate so as not to fall below the value (the first acceleration at the beginning of the setting) initially set in step S4. In this case, the rotation speed of the first rotary table 51 can be rapidly increased.

In the case where the sensor 12 detects a pedal force not smaller than the predetermined force (the threshold value) and the rotation speed of the first rotary table 51 is not lower than that of the front wheel 5 according to the detection values of the wheel rotation information unit 66 and the speed detecting unit 76 (FIG. 3), the control unit 75 rotates the first rotary table 51 at the predetermined first acceleration or higher so as to generate an auxiliary driving force.

Referring to FIG. 4, in a coasting state where the rotation speed of the first rotary table (output rotation unit) 51 is lower than that of the front wheel 5 (YES in step S1), the control unit 75 confirms the detection result of the input torque from the sensor 12 (step S6). In the case where the input torque is lower than the predetermined threshold value (No in step S6), an auxiliary driving force is not necessary. Thus, the control unit 75 does not rotate the rotor 29 and the first rotary table 51 (step S7).

In the case where the input torque is not lower than the predetermined threshold value (YES in step S6), an auxiliary driving force is necessary. The control unit 75 in a coasting state sets an acceleration of the rotation speed of the first rotary table (output rotation unit) 51 at a half of normal or less (low) (step S8). The (low) acceleration is defined as a second acceleration. In the case where a value converted to a traveling speed is used instead of the rotation speed, the acceleration is, for example, 0.6 m/s². The control unit 75 rotates the first rotary table (output rotation unit) 51 at the set second acceleration (step S5).

As a result, the rotation speed of the first rotary table (output rotation unit) 51 increases less rapidly than the normal first acceleration (broken line track) along a linear track indicated by a dash-dot line in FIG. 5. In FIG. 5, a horizontal solid line indicates the rotation speed of the wheel in a coasting state. When the rotation speed of the first rotary table (output rotation unit) 51 increases at the second acceleration so as to exceed the rotation speed of the wheel (front wheel 5) in a coasting state, the clutch 22 (FIG. 2) is engaged to transmit an auxiliary driving force to the front wheel 5, starting assisted riding.

In the case where the pedals 11 are pressed in a coasting state, the control unit 75 rotates the first rotary table (output rotation unit) 51 at the second acceleration lower than the first acceleration at least when the clutch 22 is engaged. Hence, when the clutch 22 is engaged, the rotation speed of the first rotary table (output rotation unit) 51 increases less rapidly than the first acceleration and reaches the rotation speed of the front wheel 5. This smoothly transmits an auxiliary driving force to the front wheel 5 through the first rotary table (output rotation unit) 51 from the rotor 29. As a result, an impact can be suppressed when the pedals 11 are pressed and the motor 3 starts rotating the front wheel 5 in a coasting state.

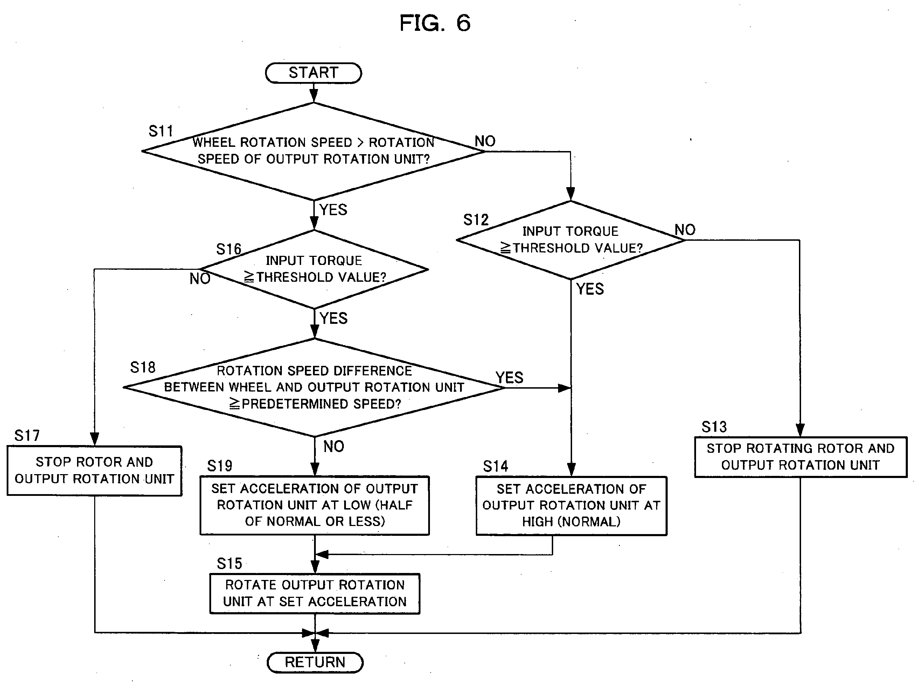

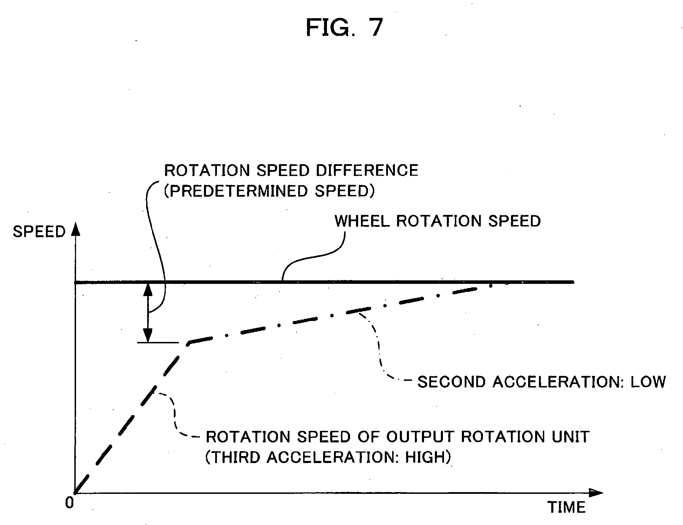

FIG. 6 is a flowchart showing a modification of a control operation performed on the electric bicycle 1. FIG. 7 is a graph for explaining a rotation speed change of the first rotary table (output rotation unit) 51 in the modification in which the rotor and the first rotary table start rotating in a coasting state.

Referring to FIG. 6, the control unit 75 monitors whether or not the rotation speed of the front wheel 5 (wheel) exceeds the rotation speed of the first rotary table (output rotation unit) 51 (step S11) as in the case of step S1 in FIG. 4 described above. When the rotation speed of the wheel exceeds the rotation speed of the first rotary table (output rotation unit) 51 (YES in step S11), the electric bicycle 1 is placed in the coasting state. When the rotation speed of the wheel is not higher than that of the first rotary table (output rotation unit) 51 (NO in step S11), the electric bicycle 1 is placed in the assisted state or stopped state. In other words, in step S11, the control unit 75 decides whether the electric bicycle 1 is in a coasting state or not. The clutch 22 (FIG. 2) is engaged in an assisted state and a stopped state but is not engaged (disengaged) in a coasting state.

In an assisted state or a stopped state (NO in step S11), the control unit 75 confirms a detection result obtained by the sensor 12 regarding a pedal force (input torque) applied to the pedals 11 by the user (step S12). In the case where the input torque is lower than the predetermined threshold value (NO in step S12), an auxiliary driving force is not necessary. Thus, the control unit 75 does not rotate the first rotary table (output rotation unit) 51 (step S13).

In the case where the input torque is not lower than the predetermined threshold value (YES in step S12), an auxiliary driving force is necessary. Thus, the control unit 75 sets an acceleration of the rotation speed of the first rotary table (output rotation unit) 51 at normal (high), that is, the first acceleration (step S14). The control unit 75 rotates the rotor 29 at the set (first) acceleration (step S15). As a result, assisted riding is performed when the rotation speed of the first rotary table (output rotation unit) 51 increases (see the broken line track in FIG. 5).

In a coasting state (YES in step S11), the control unit 75 confirms a detection result obtained by the sensor 12 regarding the input torque (step S16). In the case where the input torque is lower than the predetermined threshold value (NO in step S16), an auxiliary driving force is not necessary. Thus, the control unit 75 does not rotate the rotor 29 and the first rotary table (output rotation unit) 51 (step S17). In the case where the input torque is not lower than the predetermined threshold value (YES in step S16), the control unit 75 confirms whether or not a difference in rotation speed between the wheel (front wheel 5) and the first rotary table (output rotation unit) 51 has reached a predetermined speed (step S18).

The predetermined speed may be defined by the rotation speeds or angular velocities of the wheel (front wheel 5) and the first rotary table (output rotation unit) 51. In the case where the rotation speeds are converted to the traveling speeds of the electric bicycle 1, the predetermined speed may be defined by the converted values (traveling speeds). If the predetermined speed is defined by the traveling speeds, the predetermined speed is, for example, 4 km/h by experience. In the case where the predetermined speed is higher than 4 km/h, the start of assisted riding is delayed in a coasting state. In the case where the predetermined speed is lower than 4 km/h, it is difficult to perform the subsequent processing (processing in steps S19 and S15) because of a lack of time.

In the case of a speed difference between the wheel and the first rotary table (output rotation unit) 51 is not less than the predetermined speed (YES in step S18), the control unit 75 sets an acceleration of the rotation speed of the first rotary table (output rotation unit) 51 at normal (high) (step S14). The acceleration is defined as a third acceleration. The third acceleration may be higher than at least the second acceleration. Thus, the third acceleration may be higher than or lower than the first acceleration as long as the third acceleration is higher than the second acceleration. The control unit 75 rotates the rotor 29 at the set third acceleration (step S15). As a result, the rotation speed of the first rotary table (output rotation unit) 51 rapidly increases along a linear track indicated by a broken line in FIG. 7.

In a coasting state, in the case where a speed difference between the wheel and the first rotary table (output rotation unit) 51 is not less than the predetermined speed (NO in step S18), the control unit 75 sets an acceleration of the rotation speed of the first rotary table (output rotation unit) 51 at a half of normal or less (low), that is, the second acceleration (step S19). The control unit 75 rotates the first rotary table (output rotation unit) 51 at the set second acceleration (step S15).

As a result, referring to FIG. 7, the rotation speed of the first rotary table (output rotation unit) 51 increases at the third acceleration in a relatively rapid manner (see the broken line track) until a speed difference between the wheel and the first rotary table (output rotation unit) 51 falls below the predetermined speed. When the speed difference falls below the predetermined speed, the rotation speed of the first rotary table (output rotation unit) 51 less rapidly rises along a dash-dot line track. A solid line horizontally extended in FIG. 7 indicates the rotation speed of the wheel (front wheel 5) in a coasting state. In a coasting state, when the rotation speed of the first rotary table (output rotation unit) 51 increases at the second acceleration and exceeds the rotation speed of the wheel (front wheel 5), the clutch 22 (see FIG. 2) is engaged to transmit an auxiliary driving force to the front wheel 5, starting assisted riding.

As has been discussed, in the case where the sensor 12 detects a pedal force not smaller than the predetermined force (the threshold value) on the pedal 11 pressed in a coasting state and the rotation speed of the first rotary table (output rotation unit) 51 is reduced from the rotation speed of the front wheel 5 by the predetermined speed or more (YES in step S18), the control unit 75 rotates the first rotary table (output rotation unit) 51 at the third acceleration higher than the second acceleration until a speed difference between the rotation speed of the first rotary table (output rotation unit) 51 and the rotation speed of the front wheel 5 falls below the predetermined speed.

Hence, a speed difference between the rotation speed of the first rotary table (output rotation unit) 51 and the rotation speed of the front wheel 5 falls below the predetermined speed earlier than at the second acceleration. Accordingly, the rotation speed of the first rotary table (output rotation unit) 51 can rise to the rotation speed of the front wheel 5 (the clutch 22 is engaged) in a shorter time. As a result, the transmission of an auxiliary driving force can be started earlier from the first rotary table (output rotation unit) 51 to the front wheel 5 (riding assisted by the auxiliary driving force).

Processing in FIG. 4 and FIG. 6 varies depending upon the presence or absence of step S18. Thus, also in FIG. 6, the control unit 75 rotates the first rotary table (output rotation unit) 51 at the second acceleration lower than the first acceleration at least when the clutch 22 is engaged (step S19). Thus, when the clutch 22 is engaged, the rotation speed of the first rotary table (output rotation unit) 51 less rapidly rises to the rotation speed of the front wheel 5 than at the first acceleration and the third acceleration. This allows smooth transmission of an auxiliary driving force to the front wheel 5 from the rotor 29 through the first rotary table (output rotation unit) 51. As a result, an impact can be suppressed when the pedals 11 are pressed and the motor 3 starts rotating the front wheel 5 in a coasting state.

In the present embodiment, the output rotation unit for comparing the rotation speed of the wheel and the speed of the output rotation unit is the first rotary table 51 of the clutch 22, and the first rotary table 51 is fixed to the rotary table 46 that is externally engaged with the gear 45. The output rotation unit may be a rotation part that outputs the final force of the clutch for outputting (transmitting) a force from the motor 3 to the wheel, and the structure of the speed reducing mechanism 21 is not limited to the configuration. As has been discussed, in the case where a part attached to the rotor 29 is directly transmitted to the clutch (that is, in the absence of the speed reducing mechanism 21), the output rotation unit may be the rotor 29 or a rotating component attached to the rotor 29.

The present invention is not limited to the foregoing embodiment and thus can be changed in various ways within the scope of claims.

## Claims

1. An electric bicycle (1) that assists a driving force generated by rotating pedals (11) with human power, with an auxiliary driving force generated by a motor (3),
the electric bicycle (1) comprising:
a pedal force detector (12) that detects a pedal force applied to the pedals (11);
a motor (3) including a rotor (29), the motor (3) rotating, when the pedal force detector (12) detects that the pedal force is not smaller than a predetermined force, the rotor (29) and an output rotation unit (51) rotated by the rotor (29) so as to generate the auxiliary driving force on a wheel (5);
a clutch (22) that is disengaged to interrupt power transmission between the output rotation unit (51) and the wheel (5) when the output rotation unit (51) rotated by the rotor (29) has a rotation speed lower than a rotation speed of the wheel (5), and is engaged to transmit the auxiliary driving force to the wheel (5) from the output rotation unit (51) when the rotation speed of the output rotation unit (51) rises to the rotation speed of the wheel (5);
a wheel speed detector (66) that detects the rotation speed of the wheel (5);
**characterized by**
a rotation speed detector (76) that detects a rotation speed of one of the output rotation unit (51) and the rotor (29) corresponding to the output rotation unit (51); and
a rotation controller (75) that rotates, when the pedal force detector (12) detects that the pedal force is not smaller than the predetermined force, the output rotation unit (51) at least at a predetermined first acceleration if the rotation speed of the output rotation unit (51) is not lower than the rotatio speed of the wheel (5) based on detected values of the wheel speed detector (66) and the rotation speed detector (76), and rotates, if the rotation speed of the output rotation unit (51) is lower than the rotation speed of the wheel (5), the output rotation unit (51) at a second acceleration lower than the first acceleration when at least the clutch (22) is engaged.

2. The electric bicycle according to claim 1, wherein in the case where the pedal force detector (12) detects that the pedal force is not smaller than the predetermined force, the rotation controller (75) rotates, when the rotation speed of the output rotation unit (51) is reduced from the rotation speed of the wheel (5) at least by a predetermined speed, the output rotation unit (51) at a third acceleration higher than the second acceleration until a speed difference between the rotation speed of the output rotation unit (51) and the rotation speed of the wheel (5) falls below the predetermined speed.

## Patentansprüche

1. Elektrisches Fahrrad (1), das eine Antriebskraft unterstützt, die erzeugt wird, indem man Pedale (11) mit menschlicher Leistung in Drehung versetzt, und zwar mittels einer Hilfsantriebskraft, die von einem Motor (3) erzeugt wird,
wobei das elektrische Fahrrad (1) aufweist:
einen Pedalkraftdetektor (12), der eine Pedalkraft erfasst, die auf die Pedale (11) aufgebracht wird;
einen Motor (3), der einen Rotor (29) aufweist, wobei dann, wenn der Pedalkraftdetektor (12) erfasst, dass die Pedalkraft nicht kleiner ist als eine vorbestimmte Kraft, der Motor (3) den Rotor (29) und eine von dem Rotor (29) in Drehung versetzte Ausgangsrotationseinheit (51) in Drehung versetzt, um die Hilfsantriebskraft an einem Rad (5) zu erzeugen;
eine Kupplung (22), die getrennt wird, um eine Leistungsübertragung zwischen der Ausgangsrotationseinheit (51) und dem Rad zu unterbrechen, wenn die von dem Rotor (29) in Drehung versetzte Ausgangsrotationseinheit (51) eine Drehzahl hat, die niedriger ist als eine Drehzahl des Rades (5), und die geschlossen wird, um die Hilfsantriebskraft auf das Rad (5) von der Ausgangsrotationseinheit (51) zu übertragen, wenn die Drehzahl der Ausgangsrotationseinheit (51) auf die Drehzahl des Rades (5) ansteigt;
einen Raddrehzahldetektor (66), der die Drehzahl des Rades (5) erfasst;
**gekennzeichnet durch**
einen Rotationsdrehzahldetektor (76), der eine Drehzahl der Ausgangsrotationseinheit (51) und/oder des Rotors (29) erfasst, die der Ausgangsrotationseinheit (51) entspricht; und
eine Ratationsdrehsteuereinrichtung (75), die dann, wenn der Pedalkraftdetektor (12) erfasst, dass die Pedalkraft nicht kleiner ist als die vorbestimmte Kraft, die Ausgangsrotationseinheit (51) zumindest mit einer vorbestimmten ersten Beschleunigung in Drehung versetzt, wenn die Drehzahl der Ausgangsrotationseinheit (51) nicht kleiner ist als die Drehzahl des Rades (5), und zwar basierend auf erfassten Werten des Raddrehzahldetektors (66) und des Rotationsdrehzahldetektors (76), und die dann, wenn die Drehzahl der Ausgangsrotationseinheit (51) niedriger ist als die Drehzahl des Rades (5), die Ausgangsrotationseinheit (51) mit einer zweiten Beschleunigung in Drehung versetzt, die niedriger ist als die erste Beschleunigung, und zwar dann, wenn zumindest die Kupplung (22) geschlossen ist.

2. Elektrisches Fahrrad nach Anspruch 1, wobei für den Fall, dass der Pedalkraftdetektor (12) erfasst, dass die Pedalkraft nicht kleiner ist als die vorbestimmte Kraft, die Rotationssteuereinrichtung (75) dann, wenn die Drehzahl der Ausgangsrotationseinheit (51) gegenüber der Drehzahl des Rades (5) wenigstens um eine vorbestimmte Drehzahl reduziert ist, die Ausgangsrotationseinheit (51) mit einer dritten Beschleunigung in Drehung versetzt, die größer ist als die zweite Beschleunigung, und zwar bis eine Drehzahldifferenz zwischen der Drehzahl der Ausgangsrotationseinheit (51) und der Drehzahl des Rades (5) unter die vorbestimmte Drehzahl fällt.

## Revendications

1. Vélo électrique (1) fournissant une assistance à une force d'entraînement, générée par la mise en rotation de pédales (11) au moyen d'une énergie humaine, par le biais d'une force d'entraînement auxiliaire générée par un moteur (3),
le vélo électrique (1) comprenant :
un détecteur de force de pédalage (12) qui détecte une force de pédalage appliquée aux pédales (11) ;
un moteur (3) comprenant un rotor (29), le moteur (3) mettant en rotation le rotor (29) et une unité de rotation de sortie (51) mise en rotation par le rotor (29), lorsque le détecteur de force de pédalage (12) détecte que la force de pédalage n'est pas inférieure à une force prédéterminée, de façon à générer la force d'entraînement auxiliaire sur une roue (5) ;
un embrayage (22) qui est désenclenché afin d'interrompre la transmission de puissance entre l'unité de rotation de sortie (51) et la roue (5) lorsque l'unité de rotation de sortie (51) mise en rotation par le rotor (29) tourne à une vitesse de rotation inférieure à une vitesse de rotation de la roue (5), et est enclenché pour transmettre à la roue (5) la force d'entraînement auxiliaire provenant de l'unité de rotation de sortie (51) lorsque la vitesse de rotation de l'unité de rotation de sortie (51) augmente jusqu'à atteindre la vitesse de rotation de la roue (5) ;
un détecteur de vitesse de roue (66) qui détecte la vitesse de rotation de la roue (5) ;
**caractérisé par** un détecteur de vitesse de rotation (76) qui détecte une vitesse de rotation de l'unité de rotation de sortie (51) ou du rotor (29) correspondant à l'unité de rotation de sortie (51) ; et
une unité de commande de rotation (75) qui, lorsque le détecteur de force de pédalage (12) détecte que la force de pédalage n'est pas inférieure à la force prédéterminée, met l'unité de rotation de sortie (51) en rotation au moins selon une première accélération prédéterminée si la vitesse de rotation de l'unité de rotation de sortie (51) n'est pas inférieure à la vitesse de rotation de la roue (5) sur la base des valeurs détectées du détecteur de vitesse de roue (66) et du détecteur de vitesse de rotation (76), et met l'unité de rotation de sortie (51) en rotation, si la vitesse de rotation de l'unité de rotation de sortie (51) est inférieure à la vitesse de rotation de la roue (5), selon une deuxième accélération inférieure à la première accélération lorsqu'au moins l'embrayage (22) est enclenché.

2. Vélo électrique selon la revendication 1, dans lequel, dans le cas dans lequel le détecteur de force de pédalage (12) détecte que la force de pédalage n'est pas inférieure à la force prédéterminée, ['unité de commande de rotation (75) met l'unité de rotation de sortie (51) en rotation, lorsque la vitesse de rotation de l'unité de rotation de sortie (51) est réduite vis-à-vis de la vitesse de rotation de la roue (5) d'au moins une vitesse prédéterminée, selon une troisième accélération supérieure à la deuxième accélération jusqu'à ce qu'une différence de vitesse entre la vitesse de rotation de l'unité de rotation de sortie (51) et la vitesse de rotation de la roue (5) descende en dessous de la vitesse prédéterminée.
